# EUROPÄISCHE PATENTANMELDUNG

(11) **EP 0 590 618 A1**
(43) Veröffentlichungstag der Anmeldung: **06.04.1994**
(21) Anmeldenummer: 93115662.4
(22) Anmeldetag: 29.09.1993
(51) Int. Cl.: B60R 13/00

(54) **Flaggenhalterung für Kraftfahrzeuge**

(30) Priorität: 01.10.1992 DE 9213221 U
(71) Anmelder: Zantinge, Ronald, NL-7322 JJ Apeldoorn (NL)
(72) Erfinder: Zantinge, Ronald, NL-7322 JJ Apeldoorn (NL)
(74) Vertreter: Habbel, Hans-Georg, Dipl.-Ing.

(57) **Zusammenfassung**

Die Erfindung bezieht sich auf eine Flaggenhalterung (1) für Kraftfahrzeuge, wobei eine clipartige Ausbildung mit einer Anlagefläche (6) zur Anlage an einer Fahrzeugfensterfläche sowie mit einem federelastischen Bügel (7) vorgesehen ist, der zum Umgreifen der Fensterkante ausgebildet ist sowie mit einer Aufnahme (5) für den Flaggenstock (2), die im Abstand von und/oder schrägwinklig zu der Fensterfläche angeordnet ist.

## Beschreibung

Die Erfindung bezieht sich auf eine Flaggenhalterung für Fahrzeuge.

Für diplomatische Zwecke sind Flaggenhalterungen an Fahrzeugen bekannt, die im Bereich des Kotflügels fest am Fahrzeug vorgesehen ist. Diese Flaggenhalterungen erfordern einen speziell ausgestalteten Fuß des Flaggenstockes, so daß die Flagge mitsamt Flaggenstock und diesem Flaggenfuß von der am Fahrzeug verbleibenden Halterung getrennt werden kann. Die Halterung wird entweder an den Kotflügel des Fahrzeuges geklebt oder mit dem Kotflügel verschraubt.

Bei der bekannten Flaggenhalterung ist nachteilig, daß eine Beschädigung des Kotflügels für die Anbringung der Flaggenhalterung erfolgen muß, wenn die Flaggenhalterung an den Kotflügel angeschraubt wird. Eine Beschädigung kann dann nicht ausgeschlossen werden, wenn die Flaggenhalterung lediglich an den Kotflügel angeklebt war, aber entfernt werden soll.

Bei diplomatischen Fahrzeugen, bei denen die Flaggen häufiger gebraucht werden, kann eine derartige Flaggenhalterung sinnvoll sein. Für die selteneren privaten Anlässe, beispielsweise für Trauerfahrten, Hochzeitsfahrten od. dgl. kann jedoch ebenfalls die Anbringung einer Flagge am Fahrzeug gewünscht werden, um anderen Verkehrsteilnehmern zu signalisieren, daß sich das betreffende Fahrzeug in einem Konvoi befindet. Die dauerhafte Anbringung einer Flaggenhalterung für diese Anlässe wird jedoch nicht gewünscht.

Der Erfindung liegt die Aufgabe zugrunde, eine Flaggenhalterung für Kraftfahrzeuge zu schaffen, die kurzfristig am Fahrzeug montiert und demontiert werden kann, so daß das kurzfristige Führen einer Flagge ohne dauerhafte Anbauten am Fahrzeug oder ohne Beschädigungen des Fahrzeuges möglich ist.

Diese der Erfindung zugrundeliegende Aufgabe wird durch eine Flaggenhalterung gemäß dem kennzeichnenden Merkmal des Anspruches 1 gelöst.

Die Erfindung schlägt mit anderen Worten vor, die Flaggenhalterung lediglich auf die Kante eines Fahrzeugfensters aufzuclipsen. Auf diese Weise ist ein rascher Wechsel der Flaggen möglich oder eine rasche Anbringung der Flagge bzw. eine rasche Demontage.

Lackflächen des Fahrzeuges werden hierbei nicht beschädigt, und das Glas der Fahrzeugschieben ist ausreichend hart, um ebenfalls nicht beschädigt zu werden.

Bei entsprechender Auslegung des Clipbereiches ist es möglich, eine Scheibe abzusenken, die Flaggenhalterung zu montieren und anschließend das Fenster wieder anzuheben, also vollständig zu schließen. Auf diese Weise wird nicht nur ein Schutz gegen Witterungseinflüsse, sondern auch gegen Diebstahl erzielt. Damit der Flaggenstock bei hochgekurbeltem Fenster nicht in Kollision mit dem Türrahmen oder Dachbereich des Fahrzeuges kommt, ist die Aufnahme für den Flaggenstock entweder im seitlich ausreichenden Abstand von der Fensterfläche angeordnet und/oder in einem schrägen Winkel, so daß in jedem Fall der Flaggenstock behinderungsfrei am Türrahmen bzw. am Fahrzeugdach vorbeigeführt wird.

Vorteilhaft kann die Flaggenhalterung als einstückiges Kunststoffspritzteil ausgebildet sein, um auf diese Weise eine möglichst preisgünstige Herstellung zu ermöglichen, wobei gleichzeitig eine gute Witterungsbeständigkeit und eine gute Federelastizität des Clipbereiches sichergestellt werden kann.

Eine Einkerbung in der Anlagefläche kann vorteilhaft dort vorgesehen sein, wo der federelastische Bügel des Clipbereiches der Anlagefläche am nächsten kommt. Auf diese Weise kann eine möglichst große Vorspannung des federelastischen Bügels erzielt werden, so daß eine sichere Anlage der Flaggenhalterung an der Fahrzeugscheibe gewährleistet ist.

Um eine möglichst sichere Befestigung der Flagge zu gewährleisten und eine Gefährdung anderer Verkehrsteilnehmer auszuschließen, die sich aus einer gelösten Flagge ergeben könnte, kann der Flaggenstock fest mit der Flaggenhalterung verbunden sein und ggf. auch die Flagge ab Werk fest mit dem Flaggenstock verbunden sein, so daß hier ein unbeabsichtigtes Lösen oder Lockern einzelner Bestandteile auch bei höheren Fahrtgeschwindigkeiten oder starken Witterungseinflüssen ausgeschlossen werden kann.

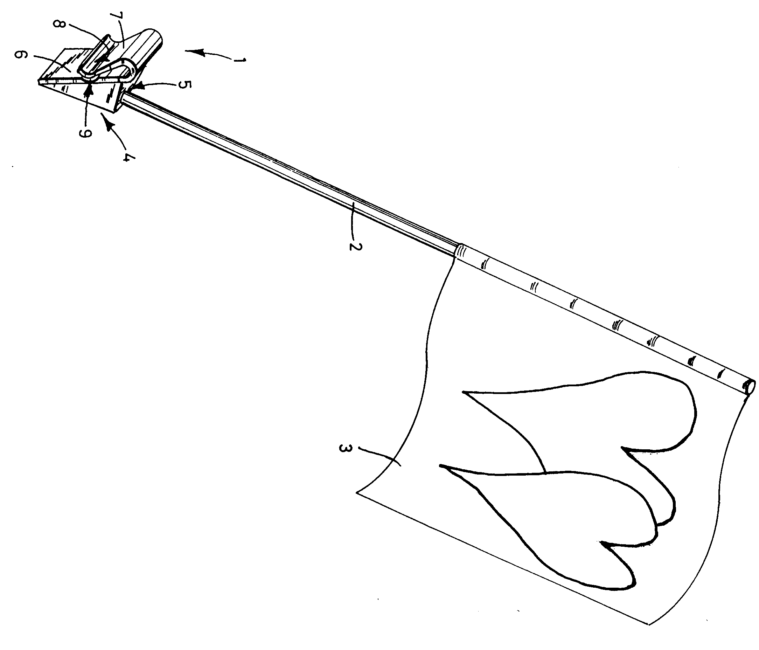

Ein Ausführungsbeispiel einer erfindungsgemäßen Flaggenhalterung wird anhand der Zeichnung im folgenden näher erläutert.

Dabei ist mit 1 allgemein eine Flaggenhalterung bezeichnet, von der aus sich ein Flaggenstock 2 erstreckt, wobei am obersten Ende des Flaggenstockes 2 eine Flagge 3 angebracht ist.

Die Flaggenhalterung 1 ist einstückig als Kunststoffspritzgußteil hergestellt, wobei dieses Teil mehrere Bereiche umfaßt: Die eigentliche Basis 4 der Flaggenhalterung weist eine Aufnahme 5 in Form einer Öffnung für den Flaggenstock 2 auf sowie eine Anlagefläche 6 zur Anlage an der Fensterscheibe eines Fahrzeuges.

Die Anlagefläche 6 ist über den Bereich der Basis 4 hinaus nach oben verlängert und geht dort kontinuierlich in einen federelastischen Bügel über, mit dem die Flaggenhalteurng 1 am Fahrzeugfenster festgeclipst werden kann.

Im Bereich 8, in dem der federelastische Bügel 7 der Anlagefläche 6 am nächsten kommt, verläuft in der Anlagefläche 6 eine Kerbe 9, so daß bei der Herstellung der federelastische Bügel 7 möglichst nahe an die Hauptfläche der Anlagefläche 6 reichen kann. Auf diese Weise wird eine möglichst große Spannung des federelastischen Bügels 7 erreicht, wenn dieser auf die Fahrzeugscheibe aufgesteckt wird. So wird ein fester und sicherer Sitz der Flaggenhalterung 1 gewährleistet.

Die Aufnahme 5 für den Flaggenstock 2 weist einerseits einen seitlichen Abstand von der Anlagefläche 6 und damit vom Fenster des Fahrzeuges auf. Zudem verläuft die Aufnahme 5 in einem schrägen Winkel zur Fensterfläche, d. h. zur Anlagefläche 6. Auf diese Weise wird der Flaggenstock behinderungsfrei an Teilen des Fensterrahmens oder des Fahrzeugdaches vorbeigeführt. Auf diese Weise wird einerseits eine Beanspruchung des Flaggenstockes verhindert, die ggf. zum Bruch des Flaggenstockes führen könnte und damit andere Verkehrsteilnehmer während der Fahrt gefährden könnte. Weiterhin wird auf diese Weise eine Beschädigung der entsprechenden Teile an dem Fahrzeug verhindert, an dem die Flagge montiert ist.

Durch die Ausbildung der Flaggenhalterung mit einem Clip kann die erfindungsgemäße Flaggenhalterung schnell und werkzeuglos sowie beschädigungsfrei am Fahrzeug montiert bzw. vom Fahrzeug wieder abgenommen werden.

Bevorzugt können die einzelnen Bestandteile der Flagge aus Kunststoffen bestehen, die miteinander verklebt werden, so daß insgesamt eine einteilige Flagge geschaffen wird, bei der das unbeabsichtigte Lockern oder Lösen einzelner Bestandteile ausgeschlossen ist.

## Patentansprüche

1. Flaggenhalterung für Kraftfahrzeuge, gekennzeichnet durch eine clipartige Ausbildung mit einer Anlagefläche (6) zur Anlage an einer Fahrzeugfensterfläche sowie mit einem federelastischen Bügel (7), der zum Umgreifen der Fensterkante ausgebildet ist sowie mit einer Aufnahme (5) für den Flaggenstock (2), die im Abstand von und/oder schrägwinklig zu der Fensterfläche angeordnet ist.

2. Flaggenhalterung nach Anspruch 1, dadurch gekennzeichnet, daß sie als einstückiges Kunststoffspritzteil ausgebildet ist.

3. Flaggenhalterung nach Anspruch 1 oder 2, gekennzeichnet durch eine Einkerbung (9) in der Anlagefläche (6), dort wo der federelastische Bügel (7) der Anlagefläche (6) am nächsten kommt.

4. Flaggenhalterung nach einem der Ansprüche 1 bis 3, gekennzeichnet durch einen fest mit der Flaggenhalterung (1) verbundenen Flaggenstock (2).

5. Flaggenhalterung nach Anspruch 4, gekennzeichnet durch eine fest mit dem Flaggenstock (2) verbundene Flagge.
